# EUROPÄISCHE PATENTANMELDUNG

(11) **EP 4 335 617 A1**
(43) Veröffentlichungstag der Anmeldung: **13.03.2024**
(21) Anmeldenummer: 23195105.4
(22) Anmeldetag: 04.09.2023
(51) Int. Cl.: B29C 49/42, B29C 49/12, B29C 49/36, B29C 49/46, B29C 49/48, B29C 49/78, B67C 3/02, B67C 3/28, B67C 3/22

(54) **KÜHLUNG DER BLASMASCHINE OHNE EXTERNEN KÜHLER**

(30) Priorität: 09.09.2022 DE 102022123063
(71) Anmelder: Krones AG, 93073 Neutraubling (DE)
(72) Erfinder: Schulz, Danilo, 93073 Neutraubling (DE); Kaiser, Alexander, 93073 Neutraubling (DE); Kobel, Michael, 93073 Neutraubling (DE); Aust, Robert, 93073 Neutraubling (DE); Senn, Konrad, 93073 Neutraubling (DE)
(74) Vertreter: Bittner, Bernhard

(57) **Zusammenfassung**

Vorrichtung (1) zum Herstellen von mit einer Flüssigkeit befüllten Kunststoffbehältnissen (15) mit einer Umformungseinrichtung (2), welche Kunststoffvorformlinge (10) zum Kunststoffbehältnissen (15) umformt, und mit einer Befüllungseinrichtung (60), welche die Kunststoffbehältnisse mit der Flüssigkeit befüllt, wobei die Befüllungseinrichtung (60) eine Transporteinrichtung (62) aufweist, welche die Behältnisse während ihrer Befüllung transportiert und eine Vielzahl von Fülleinrichtungen (64) welche die Behältnisse befüllen, wobei die Vorrichtung eine Zuführleitung aufweist, um die abzufüllende Flüssigkeit den Fülleinrichtungen zuzuführen, dadurch gekennzeichnet, dass die Vorrichtung (1) wenigstens eine Wärmetauschereinrichtung (8) aufweist, welche dazu geeignet und bestimmt ist, die den Fülleinrichtungen (64) zuzuführende Flüssigkeit auch zum Kühlen von Bestandteilen der Umformungseinrichtung (2) und/oder einer weiteren Behandlungseinheit zu verwenden.

## Beschreibung

Die vorliegende Erfindung bezieht sich auf eine Vorrichtung und ein Verfahren zum Herstellen von mit einer Flüssigkeit befüllten Kunststoffbehältnissen. Derartige Maschinen sind aus dem Stand der Technik seit langem bekannt. Die vorliegende Erfindung betrifft insbesondere eine Maschine, bei der zunächst aus Kunststoffvorformlingen Kunststoffbehältnisse gefertigt werden und diese anschließend mit einer Flüssigkeit und insbesondere mit einem Getränk befüllt werden.

Im Stand der Technik ist es bekannt, dass derartige Umformungseinrichtungen und insbesondere Bestandteile der einzelnen Umformungsstationen gekühlt werden und insbesondere beispielsweise Blasformen oder dergleichen gekühlt werden.

Zu diesem Zwecke weisen derartige Umformungsmaschinen wie etwa Blasmaschinen typischerweise ein vom Hersteller geliefertes Kühlgerät auf. Daneben kann auch eine Anbindung an eine von dem Kunden installierte Kälteanlage erfolgen. Daher muss mit jeder Maschine entweder ein Kühler geliefert werden oder aber es muss mit einer Verrohrung oder dergleichen eine derartige Kühlung zur Verfügung gestellt werden.

Der vorliegenden Erfindung liegt daher die Aufgabe zugrunde, eine derartige Kühlung der Umformungseinrichtung oder Bestandteile hiervon einfacher zu gestalten. Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Herstellen von mit einer Flüssigkeit befüllten Kunststoffbehältnissen weist eine Umformungseinrichtung auf, welche Kunststoffvorformlinge zu Kunststoffbehältnissen umformt. Weiterhin ist eine Befüllungseinrichtung vorgesehen, welche die gefertigten Kunststoffbehältnisse mit einer Flüssigkeit befüllt.

Dabei weist die Befüllungseinrichtung eine Transporteinrichtung auf, welche die Behältnisse während ihrer Befüllung transportiert. Daneben ist auch eine Vielzahlt von Fülleinrichtungen vorgesehen, welche die Behältnisse befüllen. Weiterhin weist die Vorrichtung eine Zuführleitung auf, um die abzufüllende Flüssigkeit den Fülleinrichtungen zuzuführen. Erfindungsgemäß weist die Vorrichtung eine Wärmetauschereinrichtung auf, welche dazu geeignet und bestimmt ist, die den Fülleinrichtungen zuzuführende Flüssigkeit auch zum Kühlen von Bestandteilen der Umformungseinrichtung und/oder einer weiteren Behandlungseinheit zu verwenden.

Bei der weiteren Behandlungseinrichtung kann es sich beispielsweise um eine Etikettiermaschine handeln oder auch weitere Bestandteile der Vorrichtung wie insbesondere Schaltschränke.

Hierunter wird insbesondere verstanden, dass die vergleichsweise niedrige Temperatur der Flüssigkeit auch genutzt wird, um Bestandteile der Umformungseinrichtung zu kühlen. Der besagte Wärmetauscher dient also insbesondere dazu, der Flüssigkeit "Kälte zu entziehen" um hiermit, Bestandteile der Umformungseinrichtung zu kühlen. Dabei kann es zu einer (geringfügigen) Erwärmung der den Behältnissen zuzuführenden Flüssigkeit kommen, welche jedoch in der Regel unproblematisch ist.

Der Erfindung liegt der Gedanke zugrunde, dass an einem Bereich der Vorrichtung, nämlich auf dem Weg zur Fülleinrichtungen Medium zur Verfügung steht, nämlich die abzufüllende Flüssigkeit, welche auch für Kühlzwecke verwendet werden kann.

Bevorzugt wird daher eine Möglichkeit geschaffen, um eine Kühlung über den Produktstrom zu realisieren, wobei bevorzugt, wie unten genauer beschrieben, eine Möglichkeit eines Anfahrens oder Abfahrens der Umformungseinrichtung mit Kälteenergie gesteuert wird. Dabei ist es bevorzugt auch möglich, ein Anfahren oder Abfahren der Umformungseinrichtung mit Kälteenergie zu steuern oder zu ermöglichen.

Bei einer vorteilhaften Ausführungsform ist die Wärmetauschereinrichtung dazu geeignet und bestimmt, den Produktstrom der Flüssigkeit zum Kühlen von Bestandteilen der Umformungseinrichtung zu verwenden.

Dabei sind bevorzugt diese Bestandteile der Umformungseinrichtung aus einer Gruppe von Bestandteilen ausgewählt, welche eine Blasform, insbesondere die Seitenteile einer Blasform, ein Bodenteil einer Blasform, eine Reckstange und dergleichen enthält.

Bevorzugt ist die Wärmetauschereinrichtung aus einer Gruppe von Wärmetauschereinrichtungen ausgewählt, welche Flüssigkeits/Gas Wärmetauscher und Flüssigkeit/Flüssigkeit Wärmetauscher enthält

Bevorzugt kühlt das abzufüllende Produkt bzw. der Produktstrom das Kühlmedium direkt.

Bevorzugt sind das Produkt und das Kühlmedium voneinander getrennt, beispielsweise durch eine Wandung und/oder ein Sicherheitsmedium. Auf diese Weise kann eine Verunreinigung des Produkts verhindert werden.

Bevorzugt ist die Wärmetauschereinrichtung wenigstens abschnittsweise aus einem lebensmitteltauglichen Material hergestellt. Insbesondere sind das Produkt führende Komponenten der Wärmetauschereinrichtung aus eine einem lebensmittelauglichen Material hergestellt.

Bevorzugt weist die Wärmetauschereinrichtung eine Überwachungseinrichtung auf, welche ein positives Druckgefälle überwacht.

Bei einer bevorzugten Ausführungsform ist die Wärmetauschereinrichtung in räumlicher Nähe zu der Umformungseinrichtung angeordnet. Bevorzugt sind auch Produktleitungen, welche zur Leitung des Produktstroms dienen, in räumlicher Nähe zu der Umformungseinrichtung angeordnet. Durch diese Ausgestaltung können Verluste durch lange Transportwege vermieden werden.

Bei einer weiteren vorteilhaften Ausführungsform weist die Umformungseinrichtung eine Transporteinrichtung zum Transportieren von Kunststoffvorformlinge auf und diese Transporteinrichtung weist einen bewegbaren und insbesondere drehbaren Träger auf, an dem eine Vielzahl von Umformungsstationen angeordnet ist, wobei diese Umformungsstationen jeweils Blasformeinrichtungen aufweisen, innerhalb derer die Kunststoffvorformlinge zu den Kunststoffbehältnissen umformbar sind.

Bevorzugt erfolgt eine Kühlung von Bestandteilen jeder einzelnen dieser genannten Umformungsstationen.

Besonders bevorzugt weisen die Umformungsstationen auch jeweils Beaufschlagungseinrichtungen und insbesondere Blasdüsen auf, welche an eine Mündung der Kunststoffvorformlinge oder auch an einen Tragring anlegbar sind, um diese so mit dem gasförmigen Medium zu beaufschlagen. Bei einer bevorzugten Ausführungsform weisen die Umformungsstationen auch jeweils Reckeinheiten auf, welche dazu geeignet und bestimmt sind, die Kunststoffvorformlinge in ihrer Längsrichtung zu dehnen.

Bevorzugt weisen die Umformungsstationen Bestandteile auf, die von einem Kühlmittel durchströmbar sind. Insbesondere sind Teile der Blasformen und/oder Halteeinrichtungen der Blasformen von einem Kältemittel durchströmbar. Dieses Kältemittel stammt dabei bevorzugt wenigstens teilweise von der oben erwähnten Wärmetauschereinrichtung.

Bei einer bevorzugten Ausführungsform ist zwischen der oben genannten Wärmetauschereinrichtung und der Umformungseinrichtung wenigstens eine Fördereinrichtung zum Fördern eines Kühlmittels vorgesehen.

Bei einer weiteren vorteilhaften Ausführungsform weist die Umformungseinrichtung einen Reinraum auf, innerhalb dessen die Kunststoffvorformlinge zu den Kunststoffbehältnissen expandierbar sind. Bevorzugt ist dieser Reinraum mittels wenigstens einer Wandung gegenüber einer (unsterilen) Umgebung abgedichtet. Bei einer bevorzugten Ausführungsform weist die Umformungseinrichtung eine Dichtungseinrichtung auf, welche den Reinraum gegenüber einer (unsterilen) Umgebung abdichtet. Bei dieser Dichtungseinrichtung kann es sich insbesondere um eine hydraulische Dichtung und insbesondere ein sog. Wasserschloss handeln. Für eine derartige sterile Blasformmaschine ist diese Art der Kühlung besonders geeignet, da leichter dafür Sorge getragen werden kann, dass die Kühlung unter Reinraumbedingungen erfolgt.

Bei einer bevorzugten Ausführungsform weist die Fülleirichtung einen stationär angeordneten Getränkevorrat, beispielsweise einen Getränketank, auf.

Besonders bevorzugt weist die Vorrichtung einen Drehverteiler auf, um die Flüssigkeit und insbesondere das Getränk zu einem Getränketank zu fördern, wobei dieser Getränketank bevorzugt auf einem beweglichen und insbesondere drehbaren Element der Fülleinrichtung angeordnet ist.

Besonders bevorzugt kann diese Getränkeleitung unmittelbar zur Kühlung der Umformungseinrichtung verwendet werden. Es wäre jedoch auch denkbar, dass Abzweige bzw. Abzweigleitungen geschaffen werden, welche zum Kühlen oder zum Betreiben des oben beschriebenen Wärmetauschers dienen.

Bei einer weiteren vorteilhaften Ausführungsform wird, wie oben erwähnt, eine Kühlung von Blasformen vorgenommen.

Bei einer weiteren vorteilhaften Ausführungsform ist eine Transporteinrichtung vorgesehen, welche die von der Umformungseinrichtung gefertigten Behältnisse zu der Fülleinrichtung transportiert.

Bei einer weiteren vorteilhaften Ausführungsform weist die Vorrichtung eine Erwärmungseinrichtung und insbesondere einen Ofen zum Erwärmen der Kunststoffvorformlinge auf. Bei einer bevorzugten Ausführungsformen sind bzw. werden die Umformungseinrichtung und die Fülleinrichtung miteinander synchronisiert und/oder gemeinsam gesteuert. So zieht beispielsweise eine Beschleunigung der Umformungseinrichtung auch entsprechend eine Beschleunigung der Fülleinrichtung nach sich.

Bei einer weiteren bevorzugten Ausführungsform weist die Vorrichtung eine Speichereinrichtung zum Speichern eines Kühlmediums und/oder eine Speichereinrichtung zum Zwischenspeichern der abzufüllenden Flüssigkeit auf. So kann beispielsweise ein Reservoir vorgesehen sein, in welchem ein flüssiges Kühlmittel, welches zum Kühlen der Blasformen dient gespeichert werden kann, wobei dieses flüssige Kühlmittel bevorzugt aus dem oben erwähnten Wärmetauscher stammt.

Auch ist es möglich, dass ein Reservoir zum Zwischenspeichern der abzufüllenden Flüssigkeit vorgesehen ist, aus dem wiederum der Wärmetauscher gespeist wird.

Bei einer bevorzugten Ausführungsform weist die Vorrichtung eine Kühleinrichtung auf, welche dazu geeignet und bestimmt ist vor oder während eines Startbetriebs die Kühlflüssigkeit in der Speichereinrichtung zu kühlen. Diese Kühleinrichtung kann dabei vergleichsweise klein dimensioniert sein, weil sie primär für einen Start und/oder Anfahrbetrieb der Vorrichtung dient. Diese weitere Kühleinrichtung ist dabei bevorzugt eine elektrisch betriebene Kühleinrichtung und kann beispielsweise ein Peltier - Element aufweisen

Bei einer weiteren vorteilhaften Ausführungsform weist die Vorrichtung eine (weitere) Kühleinrichtung zum Kühlen von Bestandteilen der Umformungseinrichtung auf. Es wird hier also vorgeschlagen, dass eine weitere Kühleinrichtung vorgesehen ist, welche Bestandteile der Umformungseinrichtung kühlt. Diese kann ggf. kleiner dimensioniert werden, da wie oben erwähnt ein Anteil der Kühlung durch das abzufüllende Produkt erreicht wird.

Bei einer weiteren vorteilhaften Ausführungsform weist die Vorrichtung eine Steuerungseinrichtung auf, welche einen Anfahrbetrieb und/oder einen Arbeitsbetrieb der Vorrichtung ermöglicht, wobei in dem Anfahrbetrieb eine geringere Kühlung der Bestandteile der Umformungseinrichtung durch den Produktstrom erfolgt.

Dies beruht darauf, dass zu Beginn der Produktion möglicherweise noch keine ausreichende Kühlleistung zur Verfügung steht, weil auch noch kein ausreichender Produktstrom zur Verfügung steht. Es wäre jedoch auch möglich, dass bereits mit der Kühlung begonnen wird, wenn das Getränk etwa in einen Zwischenspeicher transportiert wird und an diesem Bereich auch der Wärmetauscher ansetzt. Weiterhin ist auch zu berücksichtigen, dass ggf. in einem Anfahrbetrieb der Anlage noch keine volle Kühlung benötigt wird, da sich auch beispielsweise die Blasformen noch nicht erhitzt haben.

Bei einer weiteren bevorzugten Ausführungsform weist die Vorrichtung eine Steuerungseinrichtung auf, welche eine Geschwindigkeit der Vorrichtung und insbesondere eine Transportgeschwindigkeit der Behältnisse in Abhängigkeit von einer zur Verfügung stehenden Kühlleistung steuert.

Bei einer weiteren vorteilhaften Ausführungsform sind wie oben erwähnt die Umformungseinrichtung und die Fülleinrichtung miteinander geblockt und/oder synchronisiert.

Dabei ist es möglich, dass diese Blockung in einem bestimmten Betriebsmodus, beispielsweise im Rahmen eines Anfahrbetriebs aufgehoben wird. Anschließend können die Maschinen beispielsweise aufsynchronisiert werden.

Die vorliegende Erfindung ist weiterhin auf ein Verfahren von mit einer Flüssigkeit befüllten Kunststoffbehältnissen gerichtet, wobei eine Umformungseinrichtung Kunststoffvorformlinge zu Kunststoffbehältnissen umformt und eine Transporteinrichtung die Kunststoffbehältnisse (insbesondere von der Umformungseinrichtung) zu einer Befüllungseinrichtung transportiert und die Befüllungseinrichtung die Kunststoffbehältnisse mit der Flüssigkeit befüllt, wobei die Befüllungseinrichtung eine Transporteinrichtung aufweist, welche die Behältnisse während ihrer Befüllung transportiert und eine Vielzahl von Fülleinrichtungen vorgesehen ist, welche die Behältnisse befüllen. Weiterhin führt eine Zuführleitung der Befüllungseinrichtung die abzufüllende Flüssigkeit zu.

Erfindungsgemäß wird ein Produktstrom zur Fülleinrichtung genutzt, um Bestandteile der Umformungseinrichtung und/oder einer weiteren Behandlungseinheit zu kühlen.

Es wird daher auch verfahrensseitig vorgeschlagen, dass ein Anteil der Kühlung durch die Fülleinrichtung, bzw. durch Bestandteile der Fülleinrichtung und insbesondere eine Produktzuführung erfolgt.

Bei einem weiteren bevorzugten Verfahren ist eine Wärmetauschereinrichtung vorgesehen und/oder wird eine Wärmetauschereinrichtung verwendet, um mittels des Produktstroms die Bestandteile der Umformungseinrichtung zu kühlen.

Bei einem weiteren bevorzugten Verfahren kühlt auch eine weitere Kühleinrichtung Bestandteile der Umformungseinrichtung. Dabei ist es möglich, dass diese weitere Kühleinrichtung die Bestandteile zeitweise kühlt, bis die oben beschriebene Wärmetauscherkühleinrichtung wirkt oder auch diese weitere Kühleinrichtung eine zusätzliche Kühlung bereitstellt.

Bei einem weiteren bevorzugten Verfahren wird wenigstens zeitweise Kälteenergie gespeichert.

Weitere Vorteile und Ausführungsformen ergeben sich aus der beigefügten Zeichnung. Dabei zeigt:

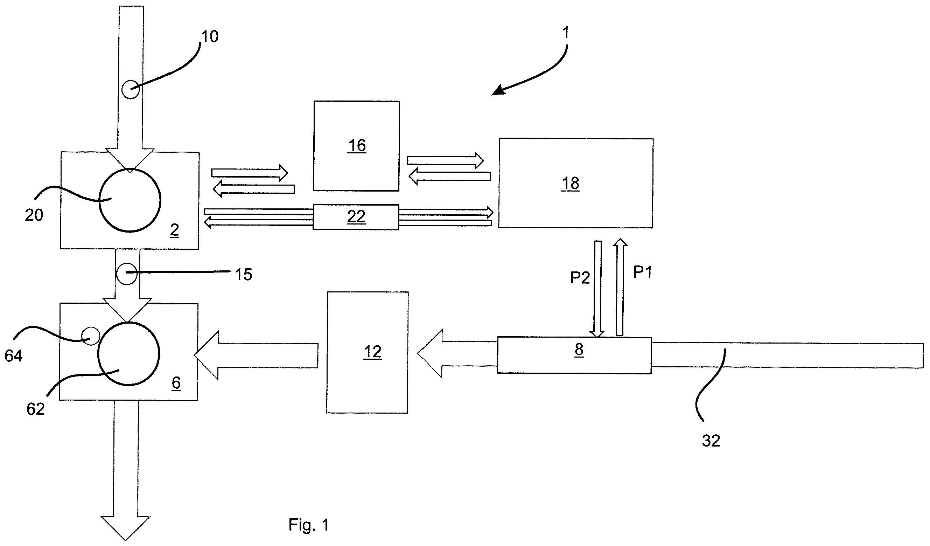

- Fig. 1: eine blockdiagrammartige Darstellung der vorliegenden Erfindung.

Fig. 1 zeigt eine schematische Darstellung einer erfindungsgemäßen Vorrichtung 1 zum Herstellen von mit Flüssigkeit befüllten Behältnisse. Dabei werden Kunststoffvorformlinge 10 einer Umformungseinrichtung 2 zugeführt und dort zu Kunststoffbehältnissen 15 umgeformt. Die Umformungseinrichtung weist dabei eine Transporteinrichtung 20 wie ein Blasrad zum Transportieren der zu expandierenden Kunststoffvorformlinge auf.

Die Kunststoffbehältnisse 15 werden zu einer Fülleinrichtung 6 transportiert und dort befüllt. Zu diesem Zweck weist die Fülleinrichtung 6 bevorzugt ebenfalls eine drehbare Transporteinrichtung 62 auf, an der eine Vielzahl von Fülleinrichtungen 64 angeordnet ist. Die befüllten Behältnisse werden anschließen bevorzugt verschlossen und abtransportiert.

Das Bezugszeichen 32 kennzeichnet eine Zuführleitung, welche der Fülleinrichtung die abzufüllende Flüssigkeit und insbesondere ein abzufüllendes Getränk zuführt.

Die Bezugszeichen 8 kennzeichnet eine Wärmetauschereinrichtung, welche dazu dient, den Produktstrom der durch die Zuführleitung strömt, zum Kühlen anderer Vorrichtungsteile, hier der Umformungseinrichtung 2 zu verwenden. Es wird jedoch darauf hingewiesen, dass auch andere Bestandteile einer Anlage zum Herstellen von Behältnissen auf diese Weise gekühlt werden können.

Der Pfeil P1 deutet "Kälteenergie" an, welche letztlich zum Kühlen der Vorrichtung 2 bestimmt ist und der Pfeil P2 deutet Wärme an, welche der Wärmetauschereinrichtung 8 bzw. deren unterem Teil zuströmt.

Das Bezugszeichen 12 kennzeichnet einen optionalen Puffertank, in dem die abzufüllende Flüssigkeit gespeichert werden kann. Dieser Puffertank ist bevorzugt in der Strömungsrichtung des Produkts nach dem Wärmetauscher 8 angeordnet.

Das Bezugszeichen 16 kennzeichnet einen optionalen Puffertank, der durch den Wärmetauscher 8 gekühlt werden kann, wobei auch hier wieder die beiden Pfeile den Fluss der Kälteenergie (unterer Pfeil) und den Fluss der Wärmeenergie kennzeichnen.

Dabei kann dieser optionale Puffertank auch selbst als Wärmetauscher wirken. Bei dieser Ausgestaltung erfolgt also die Kühlung der Umformungseinrichtung über den zwischengeschalteten Puffertank.

Das Bezugszeichen 22 kennzeichnet einen Bypass zum Umgehen des Puffertanks 16. Wenn dieser Bypass aktiviert ist, wird die Umformungseinrichtung direkt von dem Wärmetauscher gekühlt.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung (1) zum Herstellen von mit einer Flüssigkeit befüllten Kunststoffbehältnissen (15) mit einer Umformungseinrichtung (2), welche Kunststoffvorformlinge (10) zu Kunststoffbehältnissen (15) umformt, und mit einer Befüllungseinrichtung (60), welche die Kunststoffbehältnisse mit der Flüssigkeit befüllt, wobei die Befüllungseinrichtung (60) eine Transporteinrichtung (62) aufweist, welche die Behältnisse während ihrer Befüllung transportiert und eine Vielzahl von Fülleinrichtungen (64) aufweist, welche die Behältnisse befüllen, wobei die Vorrichtung eine Zuführleitung aufweist, um die abzufüllende Flüssigkeit den Fülleinrichtungen (64) zuzuführen,
**dadurch gekennzeichnet, dass**
die Vorrichtung (1) wenigstens eine Wärmetauschereinrichtung (8) aufweist, welche dazu geeignet und bestimmt ist, die den Fülleinrichtungen (64) zuzuführende Flüssigkeit auch zum Kühlen von Bestandteilen der Umformungseinrichtung (2) und/oder einer weiteren Behandlungseinheit zu verwenden.

2. Vorrichtung (1) nach Anspruch 1,
**dadurch gekennzeichnet, dass**
die Wärmetauschereinrichtung dazu geeignet und bestimmt ist, den Produktstrom der Flüssigkeit zum Kühlen von Bestandteilen der Umformungseinrichtung zu verwenden.

3. Vorrichtung (1) nach wenigstens einem der vorangegangenen Ansprüche,
**dadurch gekennzeichnet, dass**
die Umformungseinrichtung (2) eine Transporteinrichtung (20) zum Transportieren der Kunststoffvorformlinge (10) aufweist und diese Transporteinrichtung (20) einen drehbaren Träger aufweist, an dem eine Vielzahl von Umformungsstationen angeordnet ist, wobei diese Umformungsstationen jeweils Blasformeinrichtungen aufweisen, innerhalb derer die Kunststoffvorformlinge zu den Kunststoffbehältnissen umformbar sind.

4. Vorrichtung (1) nach wenigstens einem der vorangegangenen Ansprüche,
**dadurch gekennzeichnet, dass**
die Vorrichtung (1) eine Speichereinrichtung zum Speichern eines Kühlmediums aufweist.

5. Vorrichtung (1) nach wenigstens einem der vorangegangenen Ansprüche,
**dadurch gekennzeichnet, dass**
die Vorrichtung eine Kühleinrichtung aufweist, welche dazu geeignet und bestimmt ist vor oder während eines Startbetriebs die Kühlflüssigkeit in der Speichereinrichtung zu kühlen.

6. Vorrichtung (1) nach wenigstens einem der vorangegangenen Ansprüche,
**dadurch gekennzeichnet, dass**
die Vorrichtung (1) eine Kühleinrichtung (100) zum Kühlen von Bestandteilen der Umformungseinrichtung aufweist.

7. Vorrichtung (1) nach wenigstens einem der vorangegangenen Ansprüche,
**dadurch gekennzeichnet, dass**
die Vorrichtung eine Steuerungseinrichtung aufweist, welche einen Anfahrbetrieb sowie einen Arbeitsbetrieb der Vorrichtung ermöglicht, wobei in dem Anfahrbetrieb eine geringere Kühlung der Bestandteile der Umformungseinrichtung durch den Produktstrom erfolgt.

8. Vorrichtung (1) nach wenigstens einem der vorangegangenen Ansprüche,
**dadurch gekennzeichnet, dass**
die Vorrichtung eine Steuerungseinrichtung aufweist, welche eine Geschwindigkeit der Vorrichtung und insbesondere eine Transportgeschwindigkeit, der Behältnisse in Abhängigkeit von einer zur Verfügung stehenden Kühlleistung steuert.

9. Vorrichtung (1) nach wenigstens einem der vorangegangenen Ansprüche,
**dadurch gekennzeichnet, dass**
die Umformungseinrichtung und die Fülleinrichtung miteinander geblockt und/oder synchronisiert sind.

10. Verfahren zum Herstellen von mit einer Flüssigkeit befüllten Kunststoffbehältnissen (15) wobei eine Umformungseinrichtung (2), Kunststoffvorformlinge (10) zu Kunststoffbehältnissen (15) umformt, eine Transporteinrichtung die Kunststoffbehältnisse zu einer Befüllungseinrichtung (60) transportiert und die Befüllungseinrichtung (60) die Kunststoffbehältnisse mit der Flüssigkeit befüllt, wobei die Befüllungseinrichtung (60) eine Transporteinrichtung (62) aufweist, welche die Behältnisse während ihrer Befüllung transportiert und eine Vielzahl von Fülleinrichtungen (64) aufweist, welche die Behältnisse befüllen, und wobei eine Zuführleitung der Befüllungseinrichtung (60) die abzufüllende Flüssigkeit zuführt,
**dadurch gekennzeichnet, dass**
ein Produktstrom der der Fülleinrichtung (60) zuzuführenden Flüssigkeit genutzt wird um Bestandteile der Umformungseinrichtung (2) und/oder einer weiteren Behandlungseinheit zu kühlen.

11. Verfahren nach dem vorangegangenen Anspruch,
**dadurch gekennzeichnet, dass**
eine Wärmetauschereinrichtung vorgesehen ist, um mittels des Produktstroms die Bestandteile der Umformungseinrichtung (2) zu kühlen.

12. Verfahren nach wenigstens einem der vorangegangenen Ansprüche,
**dadurch gekennzeichnet, dass**
eine weitere Kühleinrichtung Bestandteile der Umformungseinrichtung kühlt.

13. Verfahren nach wenigstens einem der vorangegangenen Ansprüche,
**dadurch gekennzeichnet, dass**
Kälteenergie gespeichert wird.
